(19) Europäisches Patentamt
European Patent Office
Office européen des brevets

(11) **EP 1 494 385 B1**

(12) **EUROPEAN PATENT SPECIFICATION**

(45) Date of publication and mention
of the grant of the patent:
**24.09.2008 Bulletin 2008/39**

(51) Int Cl.:
***H04L 1/18*** (2006.01)

(21) Application number: **04253528.6**

(22) Date of filing: **14.06.2004**

(54) **Method and apparatus for improving scheduler performance in wireless packet data systems**

Verfahren und Vorrichtung zur Leistungsverbesserung der Ablaufsteuerungsleistung in drahtlosen Paketdatensystemen

Procédé et dispositif pour améliorer la performance d'un ordonnanceur dans des systèmes de données par paquets sans fil

(84) Designated Contracting States:
**DE FR GB**

(30) Priority: **30.06.2003 US 610444**

(43) Date of publication of application:
**05.01.2005 Bulletin 2005/01**

(73) Proprietor: **Lucent Technologies Inc.**
**Murray Hill, New Jersey 07974-0636 (US)**

(72) Inventors:
• **Stolyar, Aleksandr**
**Basking Ridge**
**New Jersey 07920 (US)**
• **Viswanathan, Harish**
**Basking Ridge**
**New Jersey 07920 (US)**
• **Zheng, Haitao**
**Microsoft Research Asia**
**Haidian District,**
**Beijing 00080 (CN)**

(74) Representative: **Sarup, David Alexander et al**
**Alcatel-Lucent Telecom Limited**
**Unit 18, Core 3,**
**Workzone**
**Innova Business Park**
**Electric Avenue**
**Enfield, EN3 7XU (GB)**

(56) References cited:
**GB-A- 2 382 945**     **US-A1- 2002 150 048**

EP 1 494 385 B1

**Description**

**Field of the Invention**

The present invention relates to wireless packet data transmission systems and, more specifically, to improving scheduler performance in such systems when hybrid automatic repeat request (HARQ) techniques are utilized.

**Background of the Invention**

Wireless communications systems are becoming an increasingly integral aspect of modern communications. Mobile radio channels in such systems are often characterized by unpredictable degradation of the channel due to fading. Fading is typically caused by various types of interference such as, for example, co-channel interference, adjacent channel interference, propagation path loss, and multi-path propagation (i.e., Rayleigh fading). Transmission errors typically occur in bursts when fading causes the signal level to go below the noise or interference level. Therefore, explicit measures often need to be taken to maintain an acceptable level of quality of the transmission over a radio channel.

The quality of the transmission over a radio channel connection may be measured by the reliability with which the receiver receives the transmitted data. This channel reliability may, for example, be defined in terms of the frame-error-rate (FER) as experienced at the receiver. In packet data transmissions, forward error correction (FEC) and automatic repeat request (ARQ) are two well-known error control techniques commonly used for noisy and fading channels (i.e., those channels with high FERs). In a system that uses FEC for error control, for example, the transmitter encodes the data using a given redundancy code, while the receiver, which has been informed of the code used, decodes the data at the receiving end. Many such systems using conventional block or convolutional codes have been explored and/or employed. In a system that uses ARQ, the receiver returns (i.e., transmits back to the transmitter) an acknowledgement which indicates whether the given transmitted packet was received free of errors (in which case an acknowledgement signal, or "ACK" is sent), or whether the packet was received with errors (in which case a negative acknowledgement signal, or "NACK" is sent). If the packet was not received error-free (i.e., if the transmitter receives back a "NACK" signal), the transmitter then re-transmits the same packet again, anticipating that the packet will be successfully received on this (or else on a further, subsequent) transmission.

Third-generation (3G) cellular systems, which are designed to support high-speed packet data service on the downlink from the base station to the mobile device, require relatively low FERs. Obtaining such low FERs in wireless environments is challenging, even in the presence of very low rate forward error correction codes. ARQ techniques, however, provide very reliable communication, albeit at the expense of variable and sometimes large delays. Therefore, in more recent attempts, hybrid ARQ schemes, in which both FEC and ARQ techniques are employed simultaneously, have been used because they combine the fixed delay error correction capability of FEC techniques with the low FER of basic ARQ schemes. Such hybrid ARQ schemes are described, for example, in S. Lin, D. Costello and M. J. Miller, "Automatic Repeat Request Error Control Scheme," IEEE Communications Magazine, vol. 22, no. 12, pp. 5-16, December, 1984.

In fading channels the performance gains obtained from an FEC technique depends on the state of the channel. For example, when the received signal-to-noise ratio (SNR) is large, an uncoded system or a high code rate FEC is sufficient to give a satisfactory FER. On the other hand, for lower received SNRs, a very low rate FEC may be necessary to meet the requirements. Adaptive hybrid ARQ (HARQ) schemes using, for example, well-known Chase combining methods, can be used very efficiently in slow fading channels, since in a slow fading channel the channel remains in a particular state for relatively long periods of time. An adaptive HARQ scheme takes into account the fact that the channel is good for long periods of time and advantageously transmits information using a high rate FEC during those times. However, when the channel conditions are deteriorating, the adaptive HARQ scheme switches to a low rate code. Lowering the rate of the FEC reduces the overhead that is transmitted and thus improves the channel throughput. In comparison to non-adaptive HARQ schemes, adaptive schemes employ fewer bits for error correction. Therefore, these adaptive schemes typically result in a better overall throughput than do non-adaptive schemes.

In multi-user systems utilizing an adaptive HARQ scheme, scheduling algorithms are used to give priority to users with better channel conditions. For multi-user systems where user channel conditions change over time, such scheduling algorithms take advantage of channel variations by giving priority to the users with better channel conditions in a given time frame. Several well-known scheduling algorithms have been used to maximize the packet data throughput subject to various conditions, known as "fairness" conditions. For example, the "proportional fair" algorithm utilizes asynchronous channel variations by first selecting the user with the maximum value of the ratio of a) the calculated instantaneous transmission rate to b) the average transmission rate of past transmissions. The calculated transmission rate is typically obtained by measuring the signal-to-noise-and-interference ratio (SINR) and then mapping that SINR to a modulation and coding scheme (MCS) that equates to an expected transmission rate for that channel. Other well-known scheduling algorithms utilize differing ratios or variables to schedule transmissions but, similar to the proportional fair algorithm, they all rely on the instantaneous transmission rate of each user to attempt to assign a transmission window to each user when its channel condition is at its best. Examples of such well-known prior algorithms that rely on the instantaneous transmission rate include the "maximum weight" scheduler (described in, e.g., M. Andrews et. al., "Providing Quality of Service Over a Shared Wireless Link," IEEE Communications Magazine, 39(2):150-154, Feb. 2001) and the "exponential weight" scheduler (described in, e.g., A. Stolyar and S. Shakkaottai, "Scheduling for multiple flows sharing a time-varying channel: the exponential rule," Translations of AMS, a volume in memory of F. Karpelvich, American Mathematical Society, 2002).

In general, U.S. Patent Application Publication 2002/0150048 A1 discloses that improved data transport and management within a network communication system may be achieved by utilizing a transmit timer incorporated within the sender device and exploiting host-level statistics for a plurality of connections between a sender and receiver. In particular, U.S. Patent Application Publication 2002/0150048 A1 provides that the data transmission rate at which packets are sent is controlled by the transmit timer with a period determined based on the ratio between a then-current value of a smoothed estimate of a round trip time and a then-current value of a smoothed congestion window. As such, U.S. Patent Application Publication 2002/0150048 A1 teaches that the data rate at which packets are sent is controlled by a transmit timer that is based upon a round trip time (i.e., a time between transmission of a packet and receipt of an associated acknowledgment) and a congestion window value (i.e., a weighted measure of the number of data packets that the server is prepared to transmit to the client).

## Summary of the Invention

The present inventors have recognized that the more accurate the estimated data rate used in the scheduler for a given user, the more efficient the scheduler operations. Efficiency in scheduler operations translates directly to reduced bandwidth requirements for transmissions resulting in better Quality of Service (QoS) to mobile users. While prior scheduling algorithms using the instantaneous data rate to determine the user to be served in each scheduling interval are useful, they do not fully take into account transmission errors and the resulting transmission performance impact of retransmission techniques (e.g., HARQ) to recover those errors.

Therefore, we have invented a method and apparatus for scheduling data transmissions that maximizes data throughput and that uses retransmission information to schedule future transmissions from each user. This method and apparatus utilizes a more accurate measure of users' data rates (i.e., their effective data throughput rates) that accounts for the Frame Error Rate (FER) as well as the number of retransmissions when scheduling transmissions from the users. In one embodiment of the present invention, the effective data throughput rate is determined using a ratio of an average amount of successfully transmitted information of a packet to an average transmission time of the packet.

Specifically, in order to schedule transmissions from a plurality of mobile terminals, a data rate for future transmissions from each of the mobile terminals is calculated. The calculation of this data rate takes into account possible future retransmissions of the packet; it may also include the information about past (re)transmissions. Future transmissions from each mobile terminal are scheduled by prioritizing transmissions from those mobile terminals according to the calculated future data rate. The mobile terminal having the largest associated data rate for future transmissions is selected to transmit.

## Brief Description of the Drawing

FIG. 1 shows an illustration of a wireless communications system; and
FIG. 2 shows a flow chart illustrating a method in accordance with the principles of the present invention.

## Detailed Description of the Invention

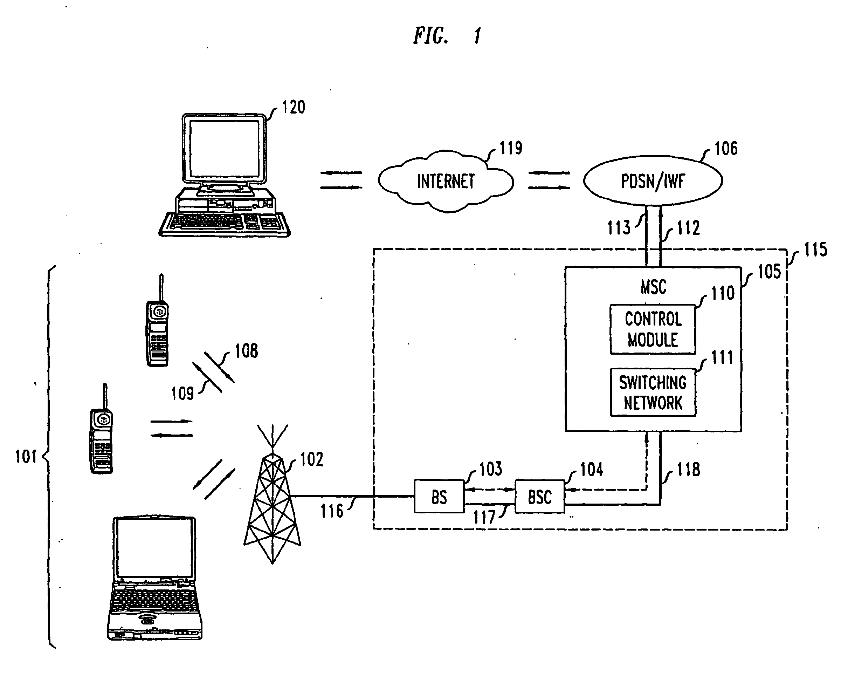

FIG. 1 shows an embodiment of a wireless communications system, in which the present invention may be implemented, in which data and voice messages are transmitted to and from mobile terminals 101. Mobile terminals 101 communicate with other communications nodes (e.g., other mobile terminals or traditional telephones) by transmitting signals to antenna 102. Antenna 102 is used to both transmit data from network 115 to the mobile terminals 101 along air interface 109, as well as to receive data from mobile terminals 101 along air interface 108 and transmit it to network 115. Antenna 102 is connected to illustrative base station 103 via connection 116 and base station 103 is connected to an illustrative base station controller (BSC) 104 via connection 117. One skilled in the art will recognize that wireless systems may or may not use BSCs, such as illustrative BSC 104. BSC 104 is connected to mobile switching center (MSC) 105 via connection 118. MSC 105, which typically controls multiple base station or base station controllers, comprises, among other components, control module 110 and switching network 111 which, together, function to issue control signals to other parts of the network and to switch incoming and outgoing voice and data messages such that they reach the correct destination. MSC 105 is connected via communication paths 112 and 113 to a packet data serving node (PDSN)/interworking facility (IWF) 106 in order to facilitate data communications over, for example, the internet 119 between wireless terminals 101 and other communication nodes, for example computer 120.

When one of the mobile terminals 101 attempts to establish a call connection to another communication node, MSC 105 receives a data message, via base station 103 and BSC 104, indicating that such an attempt is being made. Upon receiving the data message, MSC 105 checks the mobile terminal's identification, checks the called number and selects an outgoing trunk to the PDSN/IWF 106. The MSC 105 also selects a radio channel for the mobile terminal and sends a data message to the cell site to instruct the mobile to tune to the selected radio channel. In the case of calls to, rather than from, the mobile terminal, the MSC 105 sends a data message to the cell sites served by it to broadcast a paging message to the mobile terminals. MSC 105 also coordinates handoffs from one cell site to another and controls signaling functions associated with call disconnect.

As discussed above, in adaptive HARQ schemes, scheduling algorithms are used to compensate for the aforementioned fading by using feedback from the mobile device. Referring once again to FIG. 1, this scheduling function is typically implemented within network 115 by circuitry within, illustratively, the BS 103 or the BSC 104. One skilled in the art will realize that such scheduling may be implemented in any component within network 115. Additionally, one skilled in the art will also realize that the different calculations necessary in such scheduling algorithms may take place in one circuit or in separate calculations performed by individual circuits.

Prior scheduling algorithms typically rely on the instantaneous transmission rate to a particular mobile terminal based on a transmission modulation and coding scheme (MCS) to schedule transmissions to and from that terminal. Typically, such MCSs are calculated as a function of the SINR and then the MCS is mapped to a chosen instantaneous data rate for future transmissions of data. The instantaneous rate is the ratio of a) the number of information bits transmitted in a frame and b) the frame length. For example, if 1000 information bits are transmitted in a 0.002 second frame, then the instantaneous rate is 1000/0.002=500kbps. This instantaneous data rate is then used in a scheduling algorithm to determine the priority of transmissions from mobile users. An illustrative equation for calculating the MCS is:

$$MCS_{FER=x}(\eta) = \arg\max_{i \in M}\{R_i \mid F_i(\eta) < x\} \tag{1}$$

where x is the maximum allowable frame error rate , $R_i$ is the instantaneous transmission rate of MCS indexed i, $F_i(\eta)$ is the estimated frame error rate of MCS i at SINR $\eta$, and M represents the set of MCS rates that are available. Thus equation 1 uses the instantaneous transmission rate of a mobile to determine the appropriate MCS conditions necessary to achieve a maximum allowable frame error rate of x. Another illustrative equation for calculating the MCS is based on the average rate that the transmission could achieve, i.e.,

$$MCS(\eta) = \arg\max_{i \in M} R_i \cdot (1 - F_i(\eta)) \tag{2}$$

After selecting a MCS for each user, the scheduler determines the user to be served in the future based on the instantaneous rate of the users. For example, assuming *MCS(k)* represents the chosen MCS for user k, and $R_{MCS(k)}$ represents the instantaneous rate of use k that uses *MCS(k)* then the scheduler selects to serve user **U** according to

$$U = \arg\max_{k \in \Pi} \Psi(R_{MCS(k)}, k) \tag{3}$$

where $\Psi(\cdot)$ represents the scheduler metric, and $\Pi$ represents the set of active users in the system. An illustrative example of the scheduler metric, corresponding to the above mentioned proportional fair scheduler is

$$\Psi(x,k) = \frac{x}{R_{avg}(k)} \tag{4}$$

where $R_{avg}(k)$ is the average rate received by user k in the past over a certain time window. Another example of scheduler metric, corresponding to the maximum rate scheduler, is

$$\Psi(x) = x \qquad (5)$$

The instantaneous rates, i.e. { $R_{MCS(k)}$ } do not fully take into account the true transmission rate since they fail to account for frame errors and the resulting retransmissions that reduce the effective transmission rate to and from the mobile terminal. Specifically, when a frame error occurs, the transmission rate of that frame is, in essence, zero (i.e., it must be transmitted again). Thus, the instantaneous transmission rate obtained by mapping the calculated MCS value and utilized in prior art systems is not an accurate overall transmission rate of data from a transmitter to a receiver. This inaccuracy is especially harmful in a multi-user system where the scheduler must prioritize one user over another.

Thus, in accordance with the principals of the present invention, an effective data throughput rate for each user is used in a HARQ-based wireless transmission system that takes into account the retransmissions of frames that occur when frame errors are encountered. Expressed as a general equation, the effective data throughput rate is the ratio of the a) the average amount of information that the future transmission(s) could carry, and b) the average amount of time or resource that will take to carry such information.

One example calculation of the effective data throughput for a general user k assuming it is at the *Lth* (*L>0*) transmission of a packet, can be expressed as

$$R_{eff}(k) = \mu_L(\eta, \vec{\Phi}_{L-1}, MCS) = \frac{E(S \mid \eta, \vec{\Phi}_{L-1}, MCS)}{E(T \mid \eta, \vec{\Phi}_{L-1}, MCS)} \qquad (6)$$

where $\vec{\Phi}_{L-1}$ represents the past transmission history, which may include transmit power usage, channelization code and modulation and coding schemes, etc. When L=1, equation 6 can be simplified as:

$$R_{eff}(k) = \mu_1(\eta, MCS) = \frac{E(S \mid \eta, MCS)}{E(T \mid \eta, MCS)} \qquad (7)$$

In equations 6-7, MCS represents the modulation and coding scheme that is selected for user *k*, and $\eta$ represents the estimated channel SINR value of user *k*. $E(S|\eta, \vec{\Phi}_{L-1}, MCS)$ is the average number of successfully transmitted information bits related to the packet that takes into account past (re)transmissions, and $E(T|\eta, \vec{\Phi}_{L-1}, MCS)$ is the average transmission time taken by the packet which takes into account past (re)transmissions. It should be noted that the actual formats of $\mu_L(\cdot)$ depend on the underlying transmission algorithms and system implementations.

Under certain circumstances, it may be advantageous to disregard the retransmission history while defining the effective rate $R_{eff}(k)$. In this case,

$$R_{eff}(k) = \max_{MCS \in M} \mu_1(\eta, MCS) \qquad (8)$$

where $\mu_1(\eta, MCS)$ is defined as in equation 7.

Using the general equation 6 for a successful packet transmission, specific transmission rates can be derived that fully take into account retransmissions. Specifically, in a particular embodiment for a mobile terminal in a HARQ system at the *Lth* transmission of a packet, an effective transmission rate that fully reflects the effects of Chase combining in HARQ retransmissions can be expressed as:

$$\mu_L(\eta, \bar{\Phi}_{L-1}, MCS) =$$

$$\frac{R_{MCS} \cdot (1 - \prod_{q=1}^{T\max+1-L} F_{MCS}(q\eta + \hat{\eta}_L))}{\sum_{k=1}^{T\max+1-L} k \left( \prod_{q=1}^{k-1} F_{MCS}(q\eta + \hat{\eta}_L) \right)(1 - F_{MCS}(k\eta + \hat{\eta}_L)) + (T_{\max} + 1 - L) \cdot \prod_{q=1}^{T\max+1-L} F_{MCS}(q\eta + \hat{\eta}_L)} \quad (9)$$

where $k$ is the number transmissions attempted, $Tmax$ is the maximum number of retransmissions, $R_{MCS}$ represents the instantaneous data rate using $MCS$ as the modulation and coding scheme and $\hat{\eta}_L$ is the accumulated SINR of the previous $L\text{-}1$ transmission(s), i.e. $\hat{\eta}_L = \sum_{i=1}^{L-1} \eta(t_i)$ which may be substituted for $\vec{\Phi}_{L-1}$. $F_{MCS}$ represents the estimated frame error rate using $MCS$, which could take into account the impact of channel uncertainty including mobile speed and channel estimation errors.

One skilled in the art will recognize that, equation 9 can be approximated as :

$$\mu_L(\eta, \bar{\Phi}_{L-1}, MCS) = R_{MCS} \cdot \left( \sum_{k=1}^{T\max+1-L} \frac{1}{k} \cdot \left( \prod_{q=1}^{k-1} f(q\eta + \hat{\eta}_L) \right)(1 - f(k\eta + \hat{\eta}_L)) \right) \quad (10)$$

which can be further approximated by using just the first term of the summation, i.e.:

$$\mu_L(\eta, \bar{\Phi}_{L-1}, MCS) = R_{MCS} \cdot \left(1 - f(\eta + \hat{\eta}_L)\right) \quad (11)$$

Equations 10 and 11 will reduce the computational complexity of determining the effective data rate while yielding approximately the same results as equation 9.

Thus, in accordance with the principles of the present invention, the effective data throughput rates of equations 6 - 11 can be used in place of the instantaneous data rate to schedule data transmissions for individual mobile users. The scheduling algorithm for selecting each user for transmission can be expressed as:

$$U = \arg\max_{k \in \Pi} \Psi(R_{eff}(k), k) \quad (12)$$

where U is the user to be given priority in data transmission and $R_{eff}(k)$ is the effective data throughput rate for a given user k. Thus, the particular user U that is selected for transmission will be that user having the highest scheduler metric using the effective data throughput rate as the input

Thus, by utilizing one or more of equations 6 -11 above, the instantaneous data rate used to schedule data transmissions for a particular user is replaced with an effective data throughput rate that takes into account past transmissions and retransmissions as well as present and possible future channel conditions. However, the instantaneous SINR is still used to initially select an MCS for use in calculating the effective data throughput rate as calculated, for example, by equation 6 above. This results in inaccuracy because, as discussed above, the instantaneous data rate is not necessarily representative of the actual data throughput that can be expected in a HARQ system.

Therefore, in another embodiment in accordance with the principles of the present invention, the MCS used above in calculating the effective transmission rates in equations 6 - 11 is modified to take into account past transmissions and retransmissions as well as the current and future likely channel conditions. This results in more accurate scheduling because it increases the accuracy of selecting MCS conditions for mobile users. Thus, the effective data throughput rate is calculated with a greater degree of accuracy. A corresponding illustrative equation for selecting an appropriate transmission rate (MCS) in a HARQ system is:

$$MCS(\eta, L) = \begin{cases} \arg\max_{i \in M} \mu_L(\eta, \vec{\Phi}_{L-1}, i), L > 1 \\ \arg\max_{i \in M} \mu_1(\eta, i), L = 1 \end{cases} \qquad (13)$$

where, $\mu$ is the effective data rate, $\eta$ is the SINR, $i$ is the given MCS rate, and $\vec{\Phi}_{L-1}$ represents the transmission history up to the L-1 transmissions of the packet. The term $\mu_L(\eta, \vec{\Phi}_{L-1}, i)$ can be expressed as:

$$\mu_L(\eta, \vec{\Phi}_{L-1}, i) = \frac{E(S \mid \eta, \vec{\Phi}_{L-1}, i)}{E(T \mid \eta, \vec{\Phi}_{L-1}, i)}$$

$$\text{and} \qquad (14)$$

$$\mu_1(\eta, i) = \frac{E(S \mid \eta, i)}{E(T \mid \eta, i)}$$

where S is the number of information bits successfully received, T is the transmission time taken by the respective packet, $E(S \mid \eta \vec{\Phi}_{L-1}, i)$ is the average number of successfully received information bits, and $E(T \mid \eta, \vec{\Phi}_{L-1}, i)$ is the average transmission time taken by the packet. One skilled in the art will recognize that equation 14 represents the effective data throughput rate for a general MCS i at the Lth transmission of a packet. Note that the computation of $\mu_L(\eta, \vec{\Phi}_{L-1}, i)$ for MCS selection could be different from that for scheduler decision as in equations 6 to 11.

Under certain circumstances, it may be advantageous to disregard the retransmission history while choosing the MCS. In this case,

$$MCS(\eta, L) = \max_{i \in M} \mu_1(\eta, i) \qquad (15)$$

where $\mu_1(\eta, i)$ is defined as in equation 14.

Some HARQ schemes such as Chase Combining require the MCS during retransmissions to be the same as that of the initial transmission. Thus, the general MCS calculation represented by equations 13-15 takes into account past and future transmissions as well as the retransmissions that would result if future transmissions are not successful.

In a particular embodiment of an MCS calculation for a mobile terminal in a HARQ system, an MCS algorithm that fully reflects the effects of Chase combining in HARQ retransmissions can be expressed as:

$$MCS_{thrpt}^{HARQ}(\eta) = \arg\max_{i \in M} \frac{R_i \cdot (1 - \prod_{q=1}^{T\max+1} F_i(q\eta))}{\sum_{k=1}^{T\max+1} k(1 - F_i(k\eta)) \prod_{q=1}^{k-1} F_i(q\eta) + (T_{\max} + 1) \cdot \prod_{q=1}^{T\max+1} F_i(q\eta)} \qquad (16)$$

which determines the MCS for the first and all consecutive retransmissions. Here, $\eta$ is the SINR, $i$ is the MCS rate used, $R_i$ is the instantaneous transmission rate at MCS i, k is the number of transmissions, $F_i(k\eta)$ is the frame error rate of MCS i at SINR $\eta$ for a given number of transmissions k, and M represents the set of MCS rates that are available. The term $\left(1 - F_i(k\eta)\right)\prod_{q=1}^{k-1} F_i(q\eta)$ in equation 16 represents the probability of successful reception after k transmissions.

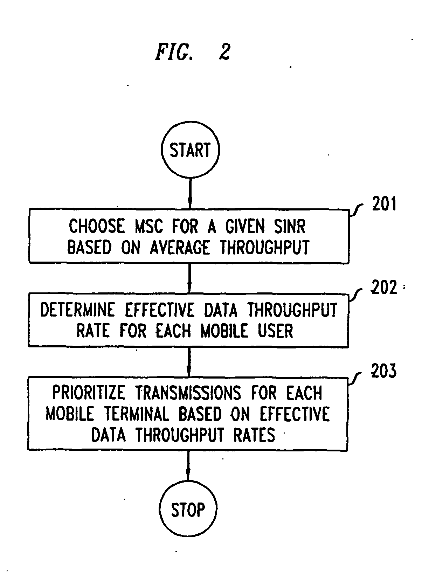

FIG. 2 shows the steps of an illustrative method in accordance with the principles of the present invention for scheduling data transmissions from a plurality of mobile terminals. One skilled in the art will recognize that, for example, the steps represented by the flow chart of FIG. 2 may illustratively be carried out by software executed on a processor. Such a processor may reside, illustratively, in the MSC, the BSC or any other component of network 112 in FIG. 1.

At step 201, an MCS such as that represented by equation 8 above, is chosen for a given SINR based on an average data throughput At step 202, the MCS selected in step 201 is used to determine an effective data throughput rate for a particular mobile user. This effective data throughput rate is used at step 203 to prioritize the transmissions from each mobile terminal according to the calculated data rates for future transmissions such as, for example, prioritizing the mobile terminal with the highest future data rate in the first transmission slot.

Thus, according to the foregoing, a more accurate effective data throughput rate for each mobile user that takes into account retransmissions is used to schedule mobile user transmissions. This effective data throughput rate is made more precise by using a more accurate MCS mapping relative to the channel SINR for the particular mobile user. The resulting estimated data rate results in more efficient scheduler operations that directly result in reduced bandwidth requirements for transmissions. The ultimate result is better Quality of Service (QoS) to mobile users.

The foregoing merely illustrates the principles of the invention. It will thus be appreciated that those skilled in the art will be able to devise various arrangements which, although not explicitly described or shown herein, embody the principles of the invention and are within its scope. Furthermore, all examples and conditional language recited herein are intended expressly to be only for pedagogical purposes to aid the reader in understanding the principles of the invention and are to be construed as being without limitation to such specifically recited examples and conditions. Moreover, all statements herein reciting aspects and embodiments of the invention, as well as specific examples thereof, are intended to encompass functional equivalents thereof.

## Claims

1. A method for scheduling data transmissions between a plurality of mobile terminals (101) and a base station (103) in a hybrid automatic repeat request system, said method comprising:

    calculating (201-202) for each mobile terminal a data rate for future transmissions between said mobile terminal (101) and a base station (103), wherein the data rate for future transmissions for said mobile terminal is based on an effective data throughput rate of transmission between said mobile terminal (101) and said base station (103), said effective data throughput rate being determined using a ratio of an average amount of successfully transmitted information of a packet to an average transmission time of a packet; and
    prioritizing (203) transmission between said mobile terminals (101) and said base station (103) based on said calculated data rates for future transmissions, **characterized in that** the mobile terminal (101) having the largest associated data rate for future transmissions is selected first to transmit,

2. The method of claim 1, wherein the effective data throughput rate is determined using an equation:

$$R_{eff}(k) = \mu_L(\eta, \vec{\Phi}_{L-1}, MCS) = \frac{E(S \mid \eta, \vec{\Phi}_{L-1}, MCS)}{E(T \mid \eta, \vec{\Phi}_{L-1}, MCS)},$$

wherein $E(S|\eta, \overline{\Phi}_{L-1}, MCS)$ comprises the average amount of successfully transmitted information of the packet that takes into account past transmission history and $E(T|\eta, \overline{\Phi}_{L-1}, MCS)$ comprises the average transmission time of the packet that takes into account the past transmission history, wherein $\eta$ comprises an estimated channel signal-to-noise-and-interference ratio, hereafter referred to as SINR value of a user $k$, $\overline{\Phi}_{L-1}$ comprises the past transmission history, and MCS comprises a modulation and coding scheme selected for the user $k$.

3. The method of claim 1, wherein the effective data throughput rate is determined using an equation:

$$R_{eff}(k) = \mu_1(\eta, MCS) = \frac{E(S\,|\,\eta, MCS)}{E(T\,|\,\eta, MCS)},$$

wherein E(S|η,*MCS*) comprises the average amount of successfully transmitted information of the packet and E (T|η,*MCS*) comprises the average transmission time of the packet, wherein η comprises an estimated channel SINR value of a user *k* and *MCS* comprises a modulation and coding scheme selected for the user *k*.

4. The method of claims 2 or 3, wherein selection of the modulation and coding scheme MCS is performed by selecting a MCS associated with a maximum value from a set of effective data rates computed for a respective set of MCSs available for selection.

5. A scheduler for use in scheduling future data transmissions between a plurality of mobile terminals (101) and a base station (103) in a hybrid automatic repeat request transmission system, said scheduler comprising:

means for calculating (201-202) for each mobile terminal a data rate for future transmissions between said mobile terminal (101) and said base station (103), wherein said data rate for future transmissions for said mobile terminal is based on an effective data throughput rate of transmission between said mobile terminal (101) and said base station (103), said effective data throughput rate being determined using a ratio of an average amount of successfully transmitted information of a packet to an average transmission time of the packet; and
means for determining (203) the priority of transmission between said mobile terminals (101) and said base station (103) according to said data rates for future transmissions, **characterized in that** the mobile terminal (101) having the largest associated data rate for future transmissions is selected first to transmit.

6. The scheduler of claim 5, wherein said effective data throughput rate is determined using an equation;

$$R_{eff}(k) = \mu_L(\eta, \vec{\Phi}_{L-1}, MCS) = \frac{E(S\,|\,\eta, \vec{\Phi}_{L-1}, MCS)}{E(T\,|\,\eta, \vec{\Phi}_{L-1}, MCS)},$$

wherein E(S|η,$\overline{\Phi}_{L-1}$, *MCS*) comprises the average amount of successfully transmitted information of the packet that takes into account past transmission history and E(T|η,$\overline{\Phi}_{L-1}$, *MCS*) comprises the average transmission time of the packet that takes into account the past transmission history, wherein η comprises an estimated channel signal-to-noise-and-interference ratio, hereafter referred to as SINR value of a user *k*, $\overline{\Phi}_{L-1}$ comprises the past transmission history, and *MCS* comprises a modulation and coding scheme selected for the user *k*.

7. The scheduler of claim 5, wherein the effective data throughput rate is determined using an equation:

$$R_{eff}(k) = \mu_1(\eta, MCS) = \frac{E(S\,|\,\eta, MCS)}{E(T\,|\,\eta, MCS)},$$

wherein E(S|η, *MCS*) comprises the average amount of successfully transmitted information of the packet and E (T|η, *MCS*) comprises the average transmission time of the packet, wherein η comprises an estimated channel SINR value of a user *k* and *MCS* comprises a modulation and coding scheme selected for the user *k*.

8. The scheduler of claims 6 or 7, wherein selection of the modulation and coding scheme MCS is performed by selecting a MCS associated with a maximum value from a set of effective data rates computed for a respective set of MCSs available for selection.

**Patentansprüche**

1.  Ein Verfahren zur Ablaufsteuerung von Datenübertragungen zwischen einer Vielzahl von mobilen Endgeräten (101) und einer Basisstation (103) in einem hybriden System für die automatische Wiederholungsanfrage, wobei das Verfahren umfasst:

    Berechnen (201-202), für jedes mobile Endgerät, einer Datenrate für zukünftige Übertragungen zwischen dem besagten mobilen Endgerät (101) und einer Basisstation (103), wobei die Datenrate für zukünftige Übertragungen für das besagte mobile Endgerät auf einer effektiven Datendurchsatzrate der Übertragung zwischen dem besagten mobilen Endgerät (101) und der besagten Basisstation (103) basiert, wobei die besagte effektive Datendurchsatzrate unter Anwendung einer Ratio zwischen einer durchschnittlichen Menge von erfolgreich übertragenen Informationen eines Pakets und der durchschnittlichen Übertragungszeit eines Pakets ermittelt wird; und
    Priorisieren (203) der Übertragung zwischen den besagten mobilen Endgeräten (101) und der besagten Basisstation (103) auf der Basis der besagten berechneten Datenraten für zukünftige Übertragungen, **dadurch gekennzeichnet, dass** das mobile Endgerät (101) mit der höchsten dazugehörigen Datenrate für zukünftige Übertragungen zuerst für die Übertragung ausgewählt wird.

2.  Das Verfahren nach Anspruch 1, wobei die effektive Datendurchsatzrate anhand der folgenden Gleichung ermittelt wird:

$$R_{eff}(k) = \mu_L(\eta, \Phi_{L-1}, MCS) = \frac{E(S \mid \eta, \Phi_{L-1}, MCS)}{E(T \mid \eta, \Phi_{L-1}, MCS)}$$

worin $E(S \mid \eta, \Phi_{L-1}, MCS)$ die durchschnittliche Menge von erfolgreich übertragenen Informationen des Pakets unter Berücksichtigung der Historik der vorherigen Übertragungen umfasst, und $E(T \mid \eta, \Phi_{L-1}, MCS)$ die durchschnittliche Übertragungszeit des Pakets unter Berücksichtigung der Historik der vorherigen Übertragungen umfasst, worin $\eta$ einen geschätzten Wert des Signal-Rausch-Störverhältnisses, nachstehend mit SINR bezeichnet, des Kanals eines Nutzers $k$ umfasst, $\Phi_{L-1}$ die Historik der vorherigen Übertragungen umfasst, und MCS ein für den Nutzer $k$ ausgewähltes Modulations- und Codierungsschema umfasst.

3.  Das Verfahren nach Anspruch 1, wobei die effektive Datendurchsatzrate anhand der folgenden Gleichung ermittelt wird:

$$R_{eff}(k) = \mu_L(\eta, MCS) = \frac{E(S \mid \eta, MCS)}{E(T \mid \eta, MCS)}$$

worin $E(S \mid \eta, MCS)$ die durchschnittliche Menge von erfolgreich übertragenen Informationen des Pakets umfasst, und $E(T \mid \eta, MCS)$ die durchschnittliche Übertragungszeit des Pakets umfasst, worin $\eta$ einen geschätzten SINR-Wert des Kanals eines Nutzers k umfasst, und *MCS* ein für den Nutzer *k* ausgewähltes Modulations- und Codierungsschema umfasst.

4.  Das Verfahren nach den Ansprüchen 2 oder 3, wobei das Auswählen eines Modulations- und Codierungsschemas MCS durch das Auswählen eines MCS in Verbindung mit einem maximalen Wert aus einem Satz von effektiven Datenraten, welche für einen entsprechenden Satz von für die Auswahl zur Verfügung stehenden MCSs berechnet wurden, erfolgt.

5.  Eine Ablaufsteuerung zur Verwendung bei der Steuerung des Ablaufs von zukünftigen Datenübertragungen zwischen einer Vielzahl von mobilen Endgeräten (101) und einer Basisstation (103) in einem hybriden System für die automatische Wiederholungsanfrage, wobei die Ablaufsteuerung umfasst:

Mittel zur Berechnung (201-202), für jedes mobile Endgerät, einer Datenrate für zukünftige Übertragungen zwischen dem besagten mobilen Endgerät (101) und der besagten Basisstation (103), wobei die besagte Datenrate für zukünftige Übertragungen für das besagte mobile Endgerät auf einer effektiven Datendurchsatzrate der Übertragung zwischen dem besagten mobilen Endgerät (101) und der besagten Basisstation (103) basiert, wobei die besagte effektive Datendurchsatzrate unter Anwendung einer Ratio zwischen einer durchschnittlichen Menge von erfolgreich übertragenen Informationen eines Pakets und der durchschnittlichen Übertragungszeit eines Pakets ermittelt wird; und

Mittel zur Bestimmung (203) der Priorität der Übertragung zwischen den besagten mobilen Endgeräten (101) und der besagten Basisstation (103) entsprechend den besagten Datenraten für zukünftige Übertragungen, **dadurch gekennzeichnet, dass** das mobile Endgerät (101) mit der höchsten dazugehörigen Datenrate für zukünftige Übertragungen zuerst für die Übertragung ausgewählt wird.

6. Die Ablaufsteuerung nach Anspruch 5, wobei die effektive Datendurchsatzrate anhand der folgenden Gleichung ermittelt wird:

$$R_{eff}(k) = \mu_L(\eta, \Phi_{L\text{-}1}, MCS) = \frac{E(S \mid \eta, \Phi_{L\text{-}1}, MCS)}{E(T \mid \eta, \Phi_{L\text{-}1}, MCS)}$$

worin $E(S \mid \eta, \Phi_{L\text{-}1}, MCS)$ die durchschnittliche Menge von erfolgreich übertragenen Informationen des Pakets unter Berücksichtigung der Historik der vorherigen Übertragungen umfasst, und $E(T \mid \eta, \Phi_{L\text{-}1}, MCS)$ die durchschnittliche Übertragungszeit des Pakets unter Berücksichtigung der Historik der vorherigen Übertragungen umfasst, worin $\eta$ einen geschätzten Wert des Signal-Rausch-Störverhältnisses, nachstehend mit SINR bezeichnet, des Kanals eines Nutzers $k$ umfasst, $\Phi_{L\text{-}1}$ die Historik der vorherigen Übertragungen umfasst, und MCS ein für den Nutzer k ausgewähltes Modulations- und Codierungsschema umfasst.

7. Die Ablaufsteuerung nach Anspruch 5, wobei die effektive Datendurchsatzrate anhand der folgenden Gleichung ermittelt wird:

$$R_{eff}(k) = \mu_L(\eta, MCS) = \frac{E(S \mid \eta, MCS)}{E(T \mid \eta, MCS)}$$

worin $E(S \mid \eta, MCS)$ die durchschnittliche Menge von erfolgreich übertragenen Informationen des Pakets umfasst, und $E(T \mid \eta, MCS)$ die durchschnittliche Übertragungszeit des Pakets umfasst, worin $\eta$ einen geschätzten SINR-Wert des Kanals eines Nutzers $k$ umfasst, und *MCS* ein für den Nutzer $k$ ausgewähltes Modulations- und Codierungsschema umfasst.

8. Die Ablaufsteuerung nach den Ansprüchen 6 oder 7, wobei das Auswählen eines Modulations- und Codierungsschemas MCS durch das Auswählen eines MCS in Verbindung mit einem maximalen Wert aus einem Satz von effektiven Datenraten, welche für einen entsprechenden Satz von für die Auswahl zur Verfügung stehenden MCSs berechnet wurden, erfolgt.

**Revendications**

1. Procédé de planification des transmissions de données entre une pluralité de terminaux mobiles (101) et une station de base (103) dans un système hybride détecteur d'erreurs avec demande de répétition, ledit procédé comprenant :

le calcul (201-202) pour chaque terminal mobile d'un débit de données pour des transmissions futures entre ledit terminal mobile (101) et une station de base (103), dans lequel le débit pour les transmissions futures pour ledit terminal mobile est basé sur un débit de données de transmission effectif entre ledit terminal mobile (101) et ladite station de base (103), ledit débit de données effectif étant déterminé en utilisant un rapport d'une quantité moyenne d'informations d'un paquet transmises avec succès et d'un temps moyen de transmission d'un paquet ; et

la détermination des priorités (203) des transmissions entre lesdits terminaux mobiles (101) et ladite station de base (103) sur la base desdits débits de données calculés pour les transmissions futures, **caractérisé en ce que** le terminal mobile (101) ayant le débit associé le plus important pour les transmissions futures est sélectionné pour la première transmission.

2. Procédé selon la revendication 1, dans lequel le débit de données effectif est déterminé en utilisant une équation :

$$R_{eff}(k) = \mu_L(\eta, \Phi_{L-1}, MCS) = \frac{E(S \mid \eta, \Phi_{L-1}, MCS)}{E(T \mid \eta, \Phi_{L-1}, MCS)}$$

dans laquelle $E(S|\eta, \Phi_{L-1}, MCS)$ comprend la quantité moyenne d'informations du paquet transmises avec succès qui prend en compte l'historique des transmissions passées et $E(T|\eta, \Phi_{L-1}, MCS)$ comprend le temps moyen de transmission du paquet qui prend en compte l'historique des transmissions passées, dans laquelle $\eta$ comprend une valeur estimée de rapport signal sur bruit, appelé ci-dessous SINR, d'une voie d'un utilisateur $k$, $\Phi_{L-1}$ comprend l'historique des transmissions passées et MCS comprend un schéma de modulation et de codage sélectionné pour l'utilisateur k.

3. Procédé selon la revendication 1, dans lequel le débit de données effectif est déterminé en utilisant une équation :

$$R_{eff}(k) = \mu_L(\eta, \Phi_{L-1}, MCS) = \frac{E(S \mid \eta, MCS)}{E(T \mid \eta, MCS)}$$

dans laquelle $E(S \mid \eta, MCS)$ comprend la quantité moyenne d'informations du paquet transmises avec succès et $E(T \mid \eta, MCS)$ comprend le temps moyen de transmission du paquet, dans laquelle $\eta$ comprend une valeur SINR estimée d'une voie d'un utilisateur $k$ et MCS comprend un schéma de modulation et de codage sélectionné pour l'utilisateur $k$.

4. Procédé selon les revendications 2 ou 3, dans lequel la sélection du schéma de modulation et de codage MCS est effectuée en sélectionnant un MCS associé à une valeur maximum dans un ensemble de débits effectifs calculés pour un ensemble respectif de MCS disponibles à la sélection.

5. Ordonnanceur à utiliser pour planifier des transmissions futures de données entre une pluralité de terminaux mobiles (101) et une station de base (103) dans un système hybride détecteur d'erreurs avec demande de répétition, ledit ordonnanceur comprenant :

des moyens de calcul (201-202) pour chaque terminal mobile d'un débit de données pour des transmissions futures entre ledit terminal mobile (101) et ladite station de base (103), dans lequel ledit débit pour les transmissions futures pour ledit terminal mobile est basé sur un débit* de données de transmission effectif entre ledit terminal mobile (101) et ladite station de base (103), ledit débit de données effectif étant déterminé en utilisant un rapport d'une quantité moyenne d'informations d'un paquet transmises avec succès et d'un temps moyen de transmission d'un paquet ; et

des moyens de détermination des priorités (203) des transmissions entre lesdits terminaux mobiles (101) et ladite station de base (103) en fonction desdits débits de données pour les transmissions futures, **caractérisé en ce que** le terminal mobile (101) ayant le débit associé le plus important pour les transmissions futures est sélectionné pour la première transmission.

6. Ordonnanceur selon la revendication 5, dans lequel le débit de données effectif est déterminé en utilisant une équation :

$$R_{eff}(k) = \mu_L(\eta, \Phi_{L-1}, MCS) = \frac{E(S \mid \eta, \Phi_{L-1}, MCS)}{E(T \mid \eta, \Phi_{L-1}, MCS)}$$

dans laquelle $E(S|\eta, \Phi_{L-1}, MCS)$ comprend la quantité moyenne d'informations du paquet transmises avec succès qui prend en compte l'historique des transmissions passées et $E(T|\eta, \Phi_{L-1}, MCS)$ comprend le temps moyen de transmission du paquet qui prend en compte l'historique des transmissions passées, dans laquelle $\eta$ comprend une valeur estimée de rapport signal sur bruit, appelé ci-dessous SINR, d'une voie d'un utilisateur $k$, $\Phi_{L-1}$ comprend l'historique des transmissions passées et MCS comprend un schéma de modulation et de codage sélectionné pour l'utilisateur $k$.

**7.** Ordonnanceur selon la revendication 5, dans lequel le débit de données effectif est déterminé en utilisant une équation :

$$R_{eff}(k) = \mu_L(\eta, \Phi_{L-1}, MCS) = \frac{E(S \mid \eta, MCS)}{E(T \mid \eta, MCS)}$$

dans laquelle $E(S|\eta, MCS)$ comprend la quantité moyenne d'informations du paquet transmises avec succès et $E(T|\eta, MCS)$ comprend le temps moyen de transmission du paquet, dans laquelle $\eta$ comprend une valeur SINR estimée d'une voie d'un utilisateur $k$ et MCS comprend un schéma de modulation et de codage sélectionné pour l'utilisateur $k$.

**8.** Ordonnanceur selon les revendications 6 ou 7, dans lequel la sélection du schéma de modulation et de codage MCS est effectuée en sélectionnant un MCS associé à une valeur maximum dans un ensemble de débits effectifs calculés pour un ensemble respectif de MCS disponibles à la sélection.

FIG. 1

FIG. 2

```
                    ┌─────────┐
                    │  START  │
                    └────┬────┘
                         │
    ┌────────────────────┴────────────────────┐  ╭ 201
    │    CHOOSE MSC FOR A GIVEN SINR           │
    │    BASED ON AVERAGE THROUGHPUT           │
    └────────────────────┬────────────────────┘
                         │
    ┌────────────────────┴────────────────────┐  ╭ 202
    │  DETERMINE EFFECTIVE DATA THROUGHPUT     │
    │    RATE FOR EACH MOBILE USER             │
    └────────────────────┬────────────────────┘
                         │
    ┌────────────────────┴────────────────────┐  ╭ 203
    │   PRIORITIZE TRANSMISSIONS FOR EACH      │
    │  MOBILE TERMINAL BASED ON EFFECTIVE      │
    │      DATA THROUGHPUT RATES               │
    └────────────────────┬────────────────────┘
                         │
                    ┌────┴────┐
                    │  STOP   │
                    └─────────┘
```

## REFERENCES CITED IN THE DESCRIPTION

### Patent documents cited in the description

- US 20020150048 A1

### Non-patent literature cited in the description

- **S. LIN ; D. COSTELLO ; M. J. MILLER.** Automatic Repeat Request Error Control Scheme. *IEEE Communications Magazine,* December 1984, vol. 22 (12), 5-16
- **M. ANDREWS.** Providing Quality of Service Over a Shared Wireless Link. *IEEE Communications Magazine,* February 2001, vol. 39 (2), 150-154
- Scheduling for multiple flows sharing a time-varying channel: the exponential rule. **A. STOLYAR ; S. SHAKKAOTTAI.** Translations of AMS. American Mathematical Society, 2002